# EUROPÄISCHE PATENTANMELDUNG

(11) **EP 3 808 591 A1**
(43) Veröffentlichungstag der Anmeldung: **21.04.2021**
(21) Anmeldenummer: 20201266.2
(22) Anmeldetag: 12.10.2020
(51) Int. Cl.: B60L 53/16, H01R 13/639, G01D 5/14

(54) **VERRIEGELUNGSVORRICHTUNG FÜR EINE ELEKTRISCHE LADEVORRICHTUNG EINES KRAFTFAHRZEUGES**

(30) Priorität: 15.10.2019 DE 102019127722
(71) Anmelder: Kiekert AG, 42579 Heiligenhaus (DE)
(72) Erfinder: Sturm, Christian, 47799 Krefeld (DE); Töpfer, Claus, 71063 Sindelfingen (DE); Klocke, Tobias, 42697 Solingen (DE); Özdogan, Fatih, 42329 Wuppertal (DE); Sonnenschein, Tim, 42329 Wuppertal (DE)

(57) **Zusammenfassung**

Gegenstand der Erfindung ist eine Verriegelungsvorrichtung für eine elektrische Ladevorrichtung (1, 2, 3) eines Kraftfahrzeuges, insbesondere eines Elektro- oder Hybrid-Kraftfahrzeuges. Diese ist mit einem entlang eines Verfahrweges (W) verfahrbaren Riegelelement (1) ausgerüstet, welches dazu vorgesehen ist, einen Ladestecker (2) in einer Ladesteckdose (3) der elektrischen Ladevorrichtung (1, 2, 3) lösbar zu verriegeln. Außerdem ist ein motorischer Antrieb (4) zur Verstellung des Riegelelementes (1) realisiert. Ferner umfasst die Verriegelungsvorrichtung einen den Verfahrweg (W) erfassender Sensor (10). Erfindungsgemäß ist der Verfahrweg (W) des Riegelelementes (1) kalibriert.

## Beschreibung

Die Erfindung betrifft eine Verriegelungsvorrichtung für eine elektrische Ladevorrichtung eines Kraftfahrzeuges, insbesondere eines Elektro- oder Hybrid-kraftfahrzeuges, mit einem entlang eines Verfahrweges verfahrbaren Riegelelement, das dazu vorgesehen ist, einen Ladestecker in eine Ladesteckdose der elektrischen Ladevorrichtung lösbar zu verriegeln, und mit einem motorischen Antrieb zur Verstellung des Riegelelementes.

Akkumulatoren von Elektro- oder Hybridkraftfahrzeugen müssen regelmäßig mit elektrischer Energie versorgt werden. Das geschieht meistens unter Rückgriff auf eine Ladeinfrastruktur, zu welcher typischerweise Ladesäulen gehören. Für den Ladevorgang mit elektrischer Energie wird der Ladestecker der Ladesäule im Allgemeinen mit einer kraftfahrzeugseitigen Ladesteckdose gekoppelt und lösbar verriegelt. Es kann aber auch umgekehrt verfahren werden. Dann wird die Ladesteckdose seitens der Ladesäule mit dem kraftfahrzeugseitigen Ladestecker lösbar verriegelt. Die Verriegelung ist erforderlich, um beispielsweise Gesundheitsgefährdungen zu vermeiden, da an dieser Stelle im Allgemeinen mit Hochspannung gearbeitet wird. Außerdem wird durch die Verriegelung sichergestellt, dass ausschließlich zuvor identifizierte Benutzer die von der Ladesäule zur Verfügung gestellte Energie auch rechtmäßig beziehen und Missbrauch verhindert wird. Zu diesem Zweck findet meistens vor einem solchen Ladevorgang eine Identifizierung des Bedieners und eine Berechtigungsprüfung mit Hilfe eines Identifikationssignals statt, wie dies grundsätzlich in der WO 2010/149426 A1 beschrieben wird.

Die Verstellung des Riegelelementes wird im Stand der Technik und beispielhaft entsprechend der gattungsbildenden CN 2020695855 U mit Hilfe eines elektromotorischen Antriebes vorgenommen. Der elektromotorische Antrieb setzt sich seinerseits aus einem Elektromotor und einem nachgeschalteten mehrstufigen Getriebe zusammen. Das mehrstufige Getriebe arbeitet über einen Nocken auf das Riegelelement, welches sich als Folge hiervon üblicherweise linear hin und her bewegen lässt.

Mit Hilfe des entlang des Verfahrweges verfahrbaren oder verstellbaren Riegelelementes lassen sich zumindest und ganz grundsätzlich die beiden Positionen "ENTRIEGELT" und "VERRIEGELT" realisieren und vorgeben. In der Position "ENTRIEGELT" des Riegelelementes kann der Ladestecker von der Ladesteckdose entfernt werden. Die Position "VERRIEGELT" stellt demgegenüber sicher, dass der Ladestecker gegenüber der Ladesteckdose verriegelt und gesichert ist. Die Position "VERRIEGELT" wird typischerweise erst dann eingenommen, wenn die zuvor bereits angesprochene und vorgesehene Benutzeridentifikation erfolgreich absolviert worden ist und auch die Bezahlung der entnommenen elektrischen Energie sichergestellt werden kann. Erst dann wird der Ladevorgang gestartet, nachdem das Riegelelement dafür gesorgt hat, dass der Ladestecker gegenüber der Ladesteckdose verriegelt worden ist. Bevorzugt ist

Wie zuvor bereits erläutert, wird im Allgemeinen mit einer kraftfahrzeugseitigen Ladesteckdose gearbeitet, die sich in einer Ausnehmung der Karosserie befindet und beispielsweise mit einer Klappe verschlossen werden kann. In die Ladesteckdose wird zum Aufladen der kraftfahrzeugseitigen Akkumulatoren der an die Ladesäule angeschlossene Ladestecker eingesteckt. Die Verriegelungsvorrichtung sorgt für seine Verriegelung. Ladesteckdose und Ladestecker sind in diesem Zusammenhang aufeinander abgestimmt.

In der Praxis soll das Riegelelement bzw. sein Verfahrweg überwacht werden, um die einwandfreie verriegelte und entriegelte Position des Ladesteckers gegenüber der Ladesteckdose zu erfassen, und insbesondere Beschädigungen des Ladesteckers und/oder des Riegelelements festzustellen. Beispielsweise kann mit der erfindungsgemäßen Ausgestaltung ein Bruch des Riegelelements detektiert werden.

Ergänzend zu den zuvor beschriebenen Szenarien sind folglich in der Serienproduktion zu berücksichtigende Abweichungen der geometrischen Abmessungen als auch Abweichungen bei der Messung des Verfahrweges des Riegelelementes in Folge von Sensortoleranzen möglich. Das kann dazu führen, dass das entsprechende Sensorsignal an einer bestimmten Position individuell bei jeder Verriegelungsvorrichtung unterschiedlich ist. Darüber hinaus werden in der Praxis Linearitätsabweichungen des Sensorsignales beobachtet, d.h. bei Messungen können Abweichung von einem linearen Zusammenhang zwischen der Position des Riegelelements entlang des Verfahrwegs und einer Stärke des Sensorsignals auftreten. Solche Linearitätsabweichungen sind ebenfalls individuell bei jeder Verriegelungsvorrichtung unterschiedlich. Hier will die Erfindung insgesamt Abhilfe schaffen.

Der Erfindung liegt das technische Problem zugrunde, eine derartige Verriegelungsvorrichtung für eine elektrische Ladevorrichtung eines Kraftfahrzeuges so weiter zu entwickeln, dass im Wesentlichen die Funktionsstellungen "ENTRIEGELT" und "VERRIEGELT" sicher und beschädigungsfrei eingenommen werden und zu einer definierten und nachvollziehbaren Position des Riegelelementes korrespondieren.

Zur Lösung dieser technischen Problemstellung umfasst eine gattungsgemäße Verriegelungsvorrichtung für eine elektrische Ladevorrichtung eines Kraftfahrzeuges ein Riegelelement, welches entlang eines Verfahrwegs W verfahren zu werden und das dazu vorgesehen ist, einen Ladestecker in einer Ladesteckdose der elektrische Ladevorrichtung zu verriegeln, einen motorischen Antrieb zur Verstellung des Riegelelements und einen den Verfahrweg erfassenden Sensor. Erfindungsgemäß ist die Verriegelungsvorrichtung dadurch gekennzeichnet, dass der Verfahrweg des Riegelelementes kalibriert ist bzw. kalibriert wird. Darunter, dass der Sensor den Verfahrweg erfasst, soll in diesem Zusammenhang verstanden werden, dass der Sensor eine Position des Riegelelement entlang des Verfahrweges erfasst. Darunter, dass der Verfahrweg des Riegelelements kalibriert ist, soll in diesem Zusammenhang verstanden werden, dass der Sensor an dem Riegelelement kalibriert wird, sodass die Position des Riegelelements entlang des Verfahrwegs mit hoher Genauigkeit durch den Sensor ermittelt werden und insbesondere der Einfluß fertigungsbedingter geometrische Abweichungen des Verfahrwegs weitgehend reduziert ist. Hierdurch kann eine sichere Feststellung der aktuellen Position des Riegelelements entlang des Verfahrwegs erreicht werden.

Die Kalibrierung kann mittels einer Einpunktkalibrierung vorgenommen werden, bei der an einer bestimmten Position des Riegelelements die Abweichungen des Sensorsignals von einem Idealsignal gemessen werden und durch Addition eines Korrekturwerts kompensiert werden können. Bevorzugt wird jedoch eine Zweipunktkalibrierung vorgenommen, bei der die Abweichungen an zwei bestimmten Positionen des Riegelelements gemessen werden, wobei zusätzlich neben der additiven Korrektur auch eine Korrektur für die Linearitätsabweichungen bestimmbar ist. Grundsätzlich ist auch vorstellbar, dass eine Mehrpunktalibrierung an mehr als zwei Positionen durchgeführt wird.

Bevorzugt wird die Kalibrierung bei einer gattungsgemäßen Verriegelungsvorrichtung beschrieben, wie sie in den Anmeldungen DE 10 2019 108 650 und DE 10 2019 117 465 der Anmelderin beschrieben ist, deren Inhalt hiermit vollumfänglich zum Gegenstand der vorliegenden Patentanmeldung gemacht wird.

Bevorzugt weist das Riegelelement einen Magneten auf und der Sensor ist dazu eingerichtet, den Verfahrweg mittels des Magnetfelds des Magneten zu erfassen. Besonders bevorzugt ist der Sensor hierzu als Hall-Sensor mit einer hohen Ortsauflösung ausgeführt. Durch das Ausstatten des Riegelelements mit einem Magneten kann auf einfache Weise eine Erzeugung eines Positionssignals für das Riegelelement erreicht werden.

In einer bevorzugten Ausgestaltung weist die Verriegelungsvorrichtung eine Steuereinheit zur Auswertung von Signalen des Sensorsauf, in der Kalibrierungsdaten des Sensors gespeichert sind. Von der erfindungsgemäßen Verriegelungsvorrichtung wrden kompensierte Signale an eine weitere und gleichsam übergeordnete Steuereinheit bzw. Steueranlage übermittelt. Dazu werden die fraglichen Korrekturwerte in der vorrichtungsseitigen Steuereinheit respektive einem der Steuereinheit zugeordneten Speicher hinterlegt..

In einer möglichen Ausgestaltung weist die Verriegelungsvorrichtung einem Endanschlag für den vollständig in der Ladesteckdose aufgenommenen Ladestecker auf, der als definierter Anschlag zum Kalibrieren des Signals des Sensors vorgesehen ist. Dieser Endanschlag kann als Position zum Kalibrieren des Sensors mittels einer Einpunktkalibrierung dienen. Für eine Zweipunktkalibrierung kann zusätzlich zu diesem definierten Anschlag der Endanschlag des vollständig eingefahrenen Riegelelementes als weiterer zweiter definierter Anschlag zugrunde gelegt werden..

In einer alternativen Ausgestaltung kann die Zweipunktkalibrierung an Positionen des Riegelelements entlang des Verfahrwegs vorgenommen werden, die nicht mit den oben beschriebenen Endanschlägen übereinstimmen, bevorzugt an Positionen in Bereichen, in denen eine besonders hohe Genauigkeit der Bestimmung der Position erforderlich ist. Beispielsweise kann ein Kalibrierpunkt in die Mitte eines Bereiches zwischen die beiden Positionen "Stecker nicht weit genug eingesteckt" und "Stecker korrekt gesteckt" gelegt werden. Ein weiterer zweiter Kalibrierpunkt kann dann beispielsweise zwischen den beiden Betriebszuständen "Stecker korrekt gesteckt" und "Stecker defekt" festgelegt werden. In diesem Fall muss die Verriegelungsvorrichtung in einer externen Vorrichtung kalibriert werden, einer sogenannten Kalibrierlehre.

Für diesen Fall ist ein Gehäuse zumindest zur Aufnahme des Antriebes für das Riegelelement vorgesehen, das mit wenigstens mindestens zwei Befestigungsdomen für hierin eingreifende Befestigungsmittel ausgerüstet ist. Die Befestigungsmittel durchgreifen zu diesem Zweck die fraglichen beiden Befestigungsdome, um folglich das Gehäuse und die Verriegelungsvorrichtung insgesamt im Bereich der Ladesteckdose fixieren zu können. Im Allgemeinen sind sogar insgesamt drei Befestigungsdome für zugehörige und hierin eingreifende Befestigungsmittel am Gehäuse vorgesehen. Bevorzugt sind diese Befestigungsdorne zusätzlich noch dazu vorgesehen, das Gehäuse an der Ladesteckdose festzulegen. Meistens verfügt das Gehäuse über eine mit Hilfe einer Dichtung verschlossene Öffnung. Das Riegelelement kann nun durch diese Dichtung hindurch gegenüber dem Gehäuse vorkragen und gegenüber dem Gehäuse entlang des Verfahrweges verfahren werden, um die zuvor bereits beschriebenen zumindest zwei Funktionsstellungen "ENTRIEGELT" und "VERRIEGELT" einnehmen zu können.

Erfindungsgemäß wird nun das Gehäuse zum Kalibrieren mit seinen Befestigungsdomen auf einer Kalibrierlehre aufgenommen. Die Kalibrierlehre weist darüber hinaus einen, bevorzugt zwei definierte Anschläge zum Kalibrieren des Signals des Sensors auf. Sobald also das Gehäuse mit seinen Befestigungsdomen auf entsprechenden Auflagepunkten aufgenommen wird und anschließend das Verriegelungselement gegen den oder die definierten Anschläge der Kalibrierlehre fährt, kann der eine Fixpunkt der Messkurve des Sensors festgelegt werden. Bevorzugt entsprechen die definierten Anschläge den oben angesprochenen Positionen im Grenzbereich "Stecker nicht weit genug eingesteckt"/"Stecker korrekt gesteckt" und "Stecker korrekt gesteckt"/"Stecker defekt".

Zur Korrektur der Linearitätsabweichung wird zunächst die sogenannte reale Kennlinie des Sensors vermessen und mit einer idealen (linearen) Kennlinie verglichen. Aus diesen Daten wird eine Korrekturtabelle mit einer daraus abgeleiteten Korrekturkennlinie gebildet, die wiederum in der Steuereinheit abgelegt und im Zuge der anschließenden Messungen zur Kalibrierung respektive Kompensation der Kennlinie des Sensorsignals berücksichtigt wird.

Sämtliche Kalibrierungen können für jede Verriegelungsvorrichtung individuell durchgeführt werden. Alternativ ist es möglich, Kalibrierungen anhand einzelner Stichproben von Verriegelungsvorrichtungen durch eine Mittelung etc. zu generalisieren und diese gleichsam generalisierte Korrekturkennlinie bei sämtlichen Verriegelungsvorrichtungen gleicher Bauart zu berücksichtigen. Dazu wird die fragliche generalisierte Korrekturkennlinie im Bespielfall in der zugehörigen Steuereinheit abgelegt. Schließlich kann die Kalibrierung auch so vorgenommen werden, dass der maximal mögliche Verfahrweg des Riegelelementes nicht vollständig, sondern überwiegend im Bereich von 10 % bis 90 % bezogen auf den gesamten Verfahrweg berücksichtigt und durch die angesprochene Kalibrierung kompensiert wird. Dadurch kann unschwer beispielsweise ein Schaden an einer das Sensorsignal an die Steuereinheit übermittelnden Sensorleitung festgestellt werden.

Im Ergebnis wird eine Verriegelungsvorrichtung für eine elektrische Ladevorrichtung eines Kraftfahrzeuges zur Verfügung gestellt, die Beschädigungen des Riegelelementes ebenso verhindert wie indifferente Funktionszustände. Denn die Verriegelungsvorrichtung wird beispielsweise mit Hilfe der Kalibrierlehre so eingestellt, dass der Verfahrweg des Riegelelementes kalibriert ist. Etwaige und unvermeidbare mechanische Toleranzen lassen sich also problemlos ausgleichen, und zwar auch noch im Nachhinein. Dadurch wird die Funktionssicherheit und Beschädigungsfreiheit auch auf langen Zeitskalen gewährleistet. Hierin sind die wesentlichen Vorzüge zu sehen.

Im Folgenden wird die Erfindung anhand einer lediglich ein Ausführungsbeispiel darstellenden Zeichnung näher erläutert; es zeigen
- Fig. 1: die erfindungsgemäße Verriegelungsvorrichtung für eine elektrische Ladevorrichtung eines Kraftfahrzeuges in einer perspektivischen Übersicht,
- Fig. 2: den Gegenstand nach der Fig. 1 in Verbindung mit einer zugehörigen Ladesteckdose und einem eingesteckten Ladestecker im Schnitt und
- Fig. 3: den Kalibriervorgang in Verbindung mit einem Sensorsignal schematisch dargestellt anhand eines Diagrammes, welches das Sensorsignal gegenüber dem Fahrweg wiedergibt.

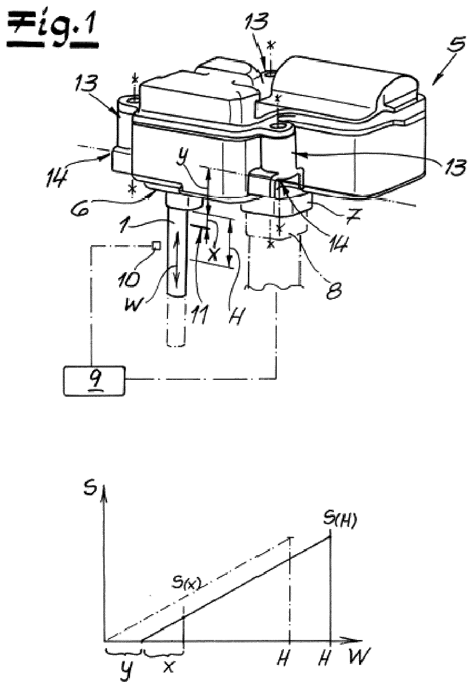

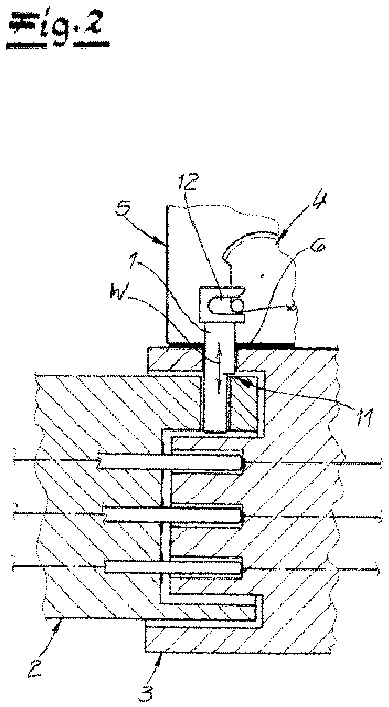

In den Figuren ist eine Verriegelungsvorrichtung für eine elektrische Ladevorrichtung 1, 2, 3, 4 eines nicht näher dargestellten Kraftfahrzeuges wiedergegeben. Die in einer perspektivischen Übersicht in der Fig. 1 gezeigte Verriegelungsvorrichtung wird dazu in einem Gehäuse 5 aufgenommen und beispielsweise in einer Ausnehmung des nicht dargestellten Kraftfahrzeuges zusammen mit der kraftfahrzeugseitigen Ladesteckdose 3 platziert. Gleiches gilt für die kraftfahrzeugseitige Ladesteckdose 3, welche in der Fig. 2 im Schnitt dargestellt ist. Demgegenüber findet sich der ebenfalls in der Fig. 2 dargestellte Ladestecker 2 säulenseitig bzw. stellt einen Bestandteil einer Ladeinfrastruktur dar.

Um Akkumulatoren des Kraftfahrzeuges laden zu können, wird in die Ladesteckdose 3 der Ladestecker 2 eingesteckt, der mit Hilfe eines Riegelelementes 1 in der Ladesteckdose 3 verriegelt wird. Bei dem Riegelelement 1 handelt es sich im Ausführungsbeispiel und nicht einschränkend um einen größtenteils zylindrischen und aus Kunststoff hergestellten Riegelstift oder Riegelbolzen.

Um die Verriegelung des Ladesteckers 2 in der Ladesteckdose 3 zu bewirken, greift das Riegelelement 1 bzw. der Riegelstift in eine in der Fig. 2 zu erkennende Ausnehmung im Ladestecker 2 ein. Das ist erst dann möglich, wenn der Ladestecker 2 einwandfrei in die Ladesteckdose 3 eingesteckt ist und seine frontseitig zu erkennenden Steckkontakte in entsprechende Steckbuchsen der Ladesteckdose 3 eingreifen. Anschließend kann der Ladevorgang erfolgen. Da ein solcher Ladevorgang mit einer anliegenden Hochspannung und unter Berücksichtigung erheblicher Ladeströme durchgeführt wird, kommt der Verriegelung des Ladesteckers 2 in der Ladesteckdose 3 mit Hilfe des Riegelelementes 1 bzw. Riegelstiftes eine besondere Bedeutung zu.

Das Riegelelement 1 ist entlang eines Verfahrweges W, der in den beiden Darstellungen in den Fig. 1 und 2 jeweils als Doppelpfeil wiedergegeben ist, verfahrbar, wozu korrespondiert eine Verstellung des Riegelelementes 1 in seiner Längsrichtung. Um dies zu bewerkstelligen ist ein motorischer Antrieb 4 vorgesehen. Der motorische Antrieb 4 definiert in Verbindung mit dem Riegelelement 1, dem Ladestecker 2 und der Ladesteckdose 3 die zuvor bereits angesprochene Ladevorrichtung 1, 2, 3, 4.

Zur Verstellung des Riegelelementes 1 greift der Antrieb 4 mit einem Zapfen in eine Ausnehmung 12 des Riegelelementes 1 zu seiner linearen Verstellung ein. Dabei durchgreift das Riegelelement 1 eine im Bereich einer Öffnung des Gehäuses 5 vorgesehene Dichtung 6, die man im Schnitt in der Fig. 2 ebenso wie in der Übersichtsdarstellung nach der Fig. 1 erkennt. Mit Hilfe der Dichtung 6 wird das Riegelelement 1 verschieblich und dichtend gegenüber dem Gehäuse 5 gehalten. In der Fig. 1 noch angedeutete Steckkontakte 8 in einem Steckvorsprung 7 am Gehäuse 5 sorgen dafür, dass die in der Fig. 1 in der Übersicht dargestellte Verriegelungsvorrichtung mit beispielsweise einem Kabelbaum des Kraftfahrzeuges gekoppelt werden kann und auf diese Weise signaltechnisch mit einer Steuereinheit 9 sowie den Akkumulatoren als Energieversorgungseinheit gekoppelt ist.

In der Fig. 1 erkennt man dann noch einen Sensor 10 zur Erfassung des Verfahrwegs W des Riegelelementes 1. Der Sensor 10 ist zu diesem Zweck an die zuvor bereits angesprochene Steuereinheit 9 angeschlossen. Dabei werden Signale des Sensors 10 von der Steuereinheit 9 ausgewertet, und zwar dahingehend, dass die Steuereinheit 9 im Endeffekt die in der Fig. 1 angedeutete Messkurve des Sensors 10 und folglich des Riegelelementes 1 abbildet. Tatsächlich hängen die im Diagramm bzw. der Messkurve dargestellten Signale S des Sensors 10 größtenteils linear vom Verfahrweg W ab. Der Sensor 10 ist ein Hallsensor mit einer hohen Ortsauflösung, kann in alternativen Ausgestaltungen allerdings auch beispielsweise als ein optischer Sensor oder dergleichen ausgebildet sein.

Die Verriegelungsvorrichtung weist einen Endanschlag 11 für den vollständig in der Ladesteckdose 3 aufgenommenen Ladesteckers 2 auf, der in Fig. 2 dargestellt. Dieser Endanschlag 11 kann als definierter Anschlag für ein Kalibrieren des Signals S des Sensors 10 genutzt werden.

Das zuvor bereits angesprochene Gehäuse 5 ist zumindest zur Aufnahme des Antriebs 4 sowie teilweise für das Riegelelement 1 vorgesehen. Außerdem verfügt das Gehäuse 5 über wenigstens zwei Befestigungsdome 13. Tatsächlich sind nach dem Ausführungsbeispiel insgesamt drei Befestigungsdome 13 an der Peripherie des Gehäuses 5 vorgesehen. In die Befestigungsdome 13 können Befestigungsmittel, beispielsweise Schrauben, eingreifen, um das Gehäuse 5 und mithin die Verriegelungsvorrichtung an der Ladesteckdose 3 zu befestigen. Die Befestigungsdome 13 können ebenfalls während eines Kalibrierungsvorganges genutzt werden, wie im Folgenden erläutert wird.

Die Kalibrierung kann grundsätzlich unter Rückgriff auf den Endanschlag 11 als definierten Anschlag durchgeführt werden. Dies kann beispielsweise auch nach Einbau der Verriegelungsvorrichtung geschehen. Zur Kalibrierung in einer Einpunktkalibrierung wird das Riegelelement 1 bis an den Endanschlag 11 verfahren und mittels des vom Sensor erfassten Signal an dieser Position kalibriert. Es kann auch mit einem weiteren definierten Anschlag eine Zweipunktkalibrierung durchgeführt werden, wobei bevorzugt ein Anschlag des vollständig eingefahrenen Riegelelementes als zweiter definierter Anschlag verwendet wird.

Bevorzugt wird jedoch die Kalibrierung mit einer externen Vorrichtung, auch als Kalibrierlehre bezeichnet, vorgenommen, welche über Auflagepunkte 14 für die Befestigungsdome 13 und einen oder zwei definierte Anschläge 11 verfügt. Durch die externe Vorrichtung können definierte Anschläge 11 gewählt werden, welche nicht mit Endanschläge des Riegelelements übereinstimmen. Bevorzugt werden die definierten Anschläge so gewählt, dass sie mit den Grenzbereichen "Stecker nicht weit genug eingesteckt"/"Stecker korrekt gesteckt" und "Stecker korrekt gesteckt"/"Stecker defekt" übereinstimmen, bzw. mit einem der Grenzbereiche, wenn nur eine Einpunktkalibrierung vorgenommen wird.

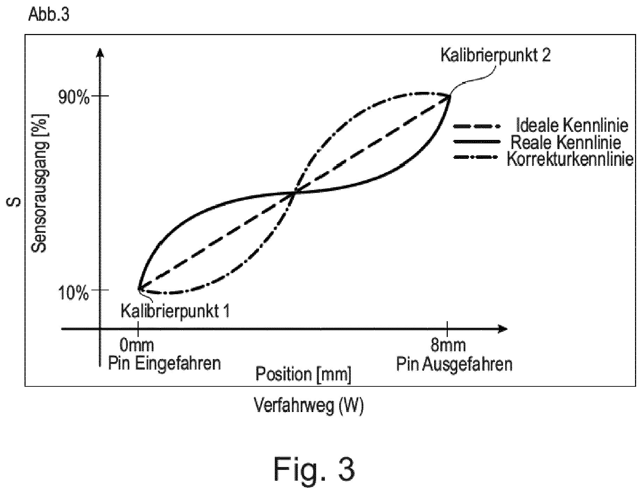

Schließlich zeigt die Fig. 3 dann noch eine strichpunktiert eingezeichnete Korrekturkennlinie für eine Korrektur der Linearitätsabweichungen, die bei ihrer Berücksichtigung die durchgezogene reale Kennlinie dahingehend korrigiert bzw. kalibriert, dass ausgangsseitig die gestrichelte ideale Kennlinie zur Verfügung steht. Hierfür sorgt die Steuereinheit 9, in welcher die fragliche und strichpunktiert in der Fig. 3 angedeutete Korrekturlinie zusammen mit den beiden Kalibrierpunkten 1 und 2 hinterlegt ist.

### Bezugszeichenliste

- 1: Riegelelement
- 2: Ladestecker
- 3: Ladesteckdose
- 4: Antrieb
- 5: Gehäuse
- 6: Dichtung
- 7: Steckvorsprung
- 8: Steckkontakte
- 9: Steuereinheit
- 10: Sensor
- 11: Anschlag
- 12: Ausnehmung
- 13: Befestigungsdome
- 14: Auflagepunkte

- H: Hub
- S: Signal
- S(x): Messpunkt
- S(H): Messpunkt
- W: Verfahrweg
- x: Weg
- y: Abstand

## Patentansprüche

1. Verriegelungsvorrichtung für eine elektrische Ladevorrichtung (1, 2, 3) eines Kraftfahrzeuges, insbesondere eines Elektro- oder Hybrid-Kraftfahrzeuges, mit einem entlang eines Verfahrweges (W) verfahrbaren Riegelelement (1), das dazu vorgesehen ist, einen Ladestecker (2) in einer Ladesteckdose (3) der elektrischen Ladevorrichtung (1, 2, 3) lösbar zu verriegeln, mit einem motorischen Antrieb (4) zur Verstellung des Riegelelementes (1), und mit einem den Verfahrweg (W) erfassenden Sensor (10), **dadurch gekennzeichnet, dass** der Verfahrweg (W) des Riegelelementes (1) kalibriert ist.

2. Verriegelungsvorrichtung nach Anspruch 1, **dadurch gekennzeichnet, dass** das Riegelelement (1) einen Magneten aufweist und der Sensor (10) dazu eingerichtet ist, den Verfahrweg (W) mittels des Magnetfelds des Magneten zu erfassen.

3. Verriegelungsvorrichtung nach Anspruch 2, **gekennzeichnet durch** eine Steuereinheit (9) zur Auswertung von Signalen (S) des Sensors (10), in der Kalibrierungsdaten des Sensors (10) gespeichert sind.

4. Verriegelungsvorrichtung nach einem der Ansprüche 1 bis 3, **gekennzeichnet durch** einen Endanschlag (11) für einen vollständig in der Ladesteckdose (3) aufgenommenen Ladestecker (2), der als definierten Anschlag zum Kalibrieren des Signals (S) des Sensors (10) vorgesehen ist.

5. Verriegelungsvorrichtung nach einem der Ansprüche 1 bis 4, **gekennzeichnet durch** ein Gehäuse (5) zumindest zur Aufnahme des Antriebes (4) für das Riegelelement (1), wobei das Gehäuse (5) mit wenigstens zwei Befestigungsdomen (13) für hierin eingreifende Befestigungsmittel ausgerüstet ist.

6. Verriegelungsvorrichtung nach Anspruch 5, **dadurch gekennzeichnet, dass** das Gehäuse (5) zum Kalibrieren mit seinen Befestigungsdomen (13) auf einer Kalibrierlehre (11, 14) aufgenommen wird.

7. Verriegelungsvorrichtung nach den Ansprüchen 4 und 6, **dadurch gekennzeichnet, dass** die Kalibrierlehre (11, 14) einerseits Auflagepunkte (14) für die Befestigungsdome des Gehäuses (5) und andererseits einen definierten Anschlag (11), bevorzugt zwei definierte Anschläge, zum Kalibrieren des Signals (S) aufweist.
